(19) **Europäisches Patentamt / European Patent Office / Office européen des brevets**

(11) **EP 2 013 155 B1**

(12) **FASCICULE DE BREVET EUROPEEN**

(45) Date de publication et mention
de la délivrance du brevet:
**21.08.2013 Bulletin 2013/34**

(21) Numéro de dépôt: **07728266.3**

(22) Date de dépôt: **18.04.2007**

(51) Int Cl.:
*C04B 35/468* (2006.01)    *C04B 35/645* (2006.01)

(86) Numéro de dépôt international:
**PCT/EP2007/053804**

(87) Numéro de publication internationale:
**WO 2007/118897 (25.10.2007 Gazette 2007/43)**

(54) **CERAMIQUES A BASE DE TITANATE DE BARYUM DOPE AU LANTHANE, PROCEDE DE PREPARATION ET UTILISATIONS**

KERAMIKEN AUF BASIS VON LANTHANDOTIERTEM BARIUMTITANAT, HERSTELLUNGSVERFAHREN UND VERWENDUNGEN

CERAMICS BASED ON LANTHANUM-DOPED BARIUM TITANATE, METHOD OF PREPARATION AND USES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **19.04.2006 FR 0603414**

(43) Date de publication de la demande:
**14.01.2009 Bulletin 2009/03**

(73) Titulaires:
• **Centre National de la Recherche Scientifique (CNRS)**
**75016 Paris (FR)**
• **Université Paul Sabatier (Toulouse III)**
**31400 Toulouse (FR)**

(72) Inventeurs:
• **GUILLEMET, Sophie**
**31120 Lacroix Falgarde (FR)**
• **BOULOS, Madona**
**31400 Toulouse (FR)**
• **DURAND, Bernard**
**31450 Fourquevaux (FR)**

• **LEBEY, Thierry**
**31120 Lacroix Falgarde (FR)**
• **NGUYEN, Quang**

**Hanoi 10307 ( CAUGLAY) (VN)**

(74) Mandataire: **Regimbeau**
**20, rue de Chazelles**
**75847 Paris Cedex 17 (FR)**

(56) Documents cités:
**US-B2- 6 905 649**

• FINLAY D. MORRISON ET AL.: "Novel Doping Mechanism for Very-High-Permittivity Barium Titanate Ceramics" J. AM. CERAM. SOC., vol. 81, no. 7, 1998, pages 1957-1960, XP002405395
• TOMONARI TAKEUCHI ET AL.: "Preparation of Dense BaTiO3 Ceramics with Submicrometer Grains by Spark Plasma Sintering" J. AM. CERAM. SOC., vol. 82, no. 4, 1999, pages 939-943, XP002405396

EP 2 013 155 B1

**Description**

La présente invention concerne un procédé de préparation de céramiques à base de titanate de baryum dopé au lanthane, les céramiques ainsi obtenues, et leurs utilisations.

Les appareillages électroniques intègrent de plus en plus de fonctionnalités dans des volumes de plus en plus restreints. La taille des composants doit donc sans cesse être réduite, et dans le même temps, leurs propriétés doivent être conservées, voire augmentées. C'est en particulier le cas des condensateurs pour lesquels on souhaite pouvoir disposer d'une capacité volumique élevée tout en maintenant une rigidité diélectrique importante.

Le titanate de baryum ($BaTiO_3$) possède des propriétés ferroélectriques élevées et ses domaines d'applications sont multiples. Il présente par exemple un grand intérêt pour la fabrication de condensateurs multicouches, de dispositifs électro-optiques ou de mémoires DRAM (Dynamic Random Accès Memories). Les températures et les tensions auxquelles sont exposées ces matériaux sont sans cesse plus grandes. Il existe donc un réel besoin d'obtention de matériaux à base de titanate de baryum de plus en plus performants, afin de réaliser des condensateurs présentant des capacités et des densités d'énergies élevées.

De nombreux travaux ont été menés dans ce sens, en particulier afin d'identifier les facteurs importants qui influencent les propriétés ferroélectriques des céramiques à base de $BaTiO_3$. Ainsi on a mis en évidence que les performances de ces céramiques peuvent être améliorées en contrôlant certains paramètres comme la taille des grains ou l'homogénéité de $BaTiO_3$. L'utilisation de $BaTiO_3$ nanométrique permet d'accroître considérablement la partie réelle de la permittivité diélectrique relative des céramiques obtenues en comparaison avec les matériaux préparés à partir de $BaTiO_3$ de taille micrométrique (US-6,905,649). Le procédé de préparation influence également les paramètres des matériaux obtenus. Plusieurs études ont ainsi mis en évidence l'intérêt de la technique de frittage flash par rapport au frittage classique (J. Mat. Sri., 36, 2001, 2329-2334), qui permet d'éviter la croissance exagérée des grains rencontrée lors du chauffage par des techniques conventionnelles. Takenchi et al. (J. Am. Ceram. Soc.,82,4,1999,939-43) décrivent un procédé de préparation de céramiques à base de titanate de baryum comprenant une étape de flash frittage.

La technique de frittage flash est une technique de mise en forme des matériaux, similaire au pressage conventionnel à chaud. Lors de la mise en oeuvre de cette technique, les précurseurs sont introduits dans une matrice, par exemple du graphite, qui permet d'appliquer une pression uni-axiale lors du frittage. Un courant électrique continu, continu-pulsé, ou alternatif est appliqué par l'intermédiaire d'électrodes, traverse la matrice de pressage conductrice et peut même, dans les cas appropriés traverser l'échantillon. La matrice agit ainsi en tant que source de chauffage, ce qui permet d'obtenir des vitesses de montée en température élevées, et de s'affranchir de l'utilisation d'un four traditionnel. Les objets ainsi frittés sont obtenus à des températures plus faibles et les temps de frittage sont significativement plus courts que lors de procédures de frittage conventionnelles. Ils présentent de plus une très grande compacité et la croissance des grains au cours du frittage est fortement inhibée.

Un autre moyen pour améliorer les propriétés des céramiques consiste à introduire un élément dopant dans le matériau utilisé. Dans le cas de $BaTiO_3$, le lanthane a montré une influence considérable sur les propriétés électriques et conductrices des céramiques obtenues (J. Am. Ceram. Soc, 84, 3, 2001, 531-538), notamment en augmentant la valeur de la partie réelle de la permittivité diélectrique relative et en diminuant la température de Curie. Les permittivités ainsi mesurées à 1 kHz, et à la température de Curie, sont de l'ordre de 10 000. Morrison et al. (J.Am.Ceram.Soc., 81,7,1998,1957-60) décrivent des céramiques à base de titanate de baryum dopé au lanthane.

Dans le but de continuer à augmenter la partie réelle de la permittivité diélectrique relative des céramiques, la Demanderesse a mis en évidence que de façon surprenante, en choisissant de façon appropriée les conditions opératoires de leur procédé de fabrication, les performances diélectriques des matériaux obtenus s'en trouvaient considérablement améliorées.

Ainsi la présente invention concerne un procédé de préparation de céramiques à base de titanate de baryum dopé au lanthane comprenant les étapes de :

    (a) frittage flash de poudres de titanate de baryum dopé au lanthane, à une température comprise entre 950°C et 1050°C, pendant une durée comprise entre 1 et 10 min, sous une pression d'au moins 50 MPa,
    (b) traitement thermique du matériau ainsi obtenu à une température comprise entre 800 °C et 900 °C pendant une durée comprise entre 2 et 24 heures, sous atmosphère d'air, ou sous atmosphère oxydante.

Dans un aspect avantageux du procédé selon l'invention, l'étape (a) est effectuée à une température de 1050 °C pendant 3 minutes sous un courant de 370 A. Cette étape est conduite sous vide primaire ou sous atmosphère neutre, par exemple sous argon ou sous azote. Préférentiellement elle est réalisée sous vide primaire.

Selon un autre aspect avantageux du procédé de la présente invention, la température de frittage est obtenue à l'aide d'une rampe de température de 50°C par minute, à partir de la température ambiante, c'est-à-dire à partir d'une température de l'ordre de 25°C.

La seconde étape du procédé selon l'invention est nécessaire afin d'enlever des traces de carbone provenant de la contamination de la matrice et pour réajuster la teneur en oxygène de l'échantillon. Des conditions spécifiques de traitement thermique telles que mentionnées ci-dessus permettent non seulement d'atteindre cet objectif, mais également d'influencer les propriétés électriques des céramiques obtenues et en particulier de leur conférer un caractère isolant. Cette étape est réalisée sous atmosphère oxydante, ou alternativement sous atmosphère d'air. La diffusion de l'oxygène durant cette étape semble conduire à une répartition hétérogène, mais surtout permet d'obtenir des valeurs de la partie réelle de la permittivité diélectrique relative jamais observées jusqu'alors.

Les céramiques susceptibles d'être obtenues par le procédé ci-dessus présentent une partie réelle de la permittivité diélectrique relative supérieure à 100 000. Cette valeur mesurée à 1 kHz est en particulier de 270 000 sur une large gamme de température.

Dans un aspect préféré du procédé tel que mentionné ci-dessus, l'étape (b) s'effectue à une température de 850°C, pendant 2 heures sous atmosphère d'air.

Le matériau de départ utilisé pour la mise en oeuvre du procédé selon l'invention est le titanate de baryum (BaTiO$_3$) dopé au lanthane. Ce matériau peut être représenté par la formule :

$$La_xBA_{(1-x)}Ti_{(1-x/4)}O_3$$

dans laquelle 0<x<0,14.

Dans un aspect préféré de l'invention, x est compris entre 0,04 et 0,06, et de façon particulière, la valeur de x est fixée à 0,048.

Ce matériau de départ peut être préparé par des techniques conventionnelles de chimie douce ou par voie solide-solide.

Pour la mise en oeuvre de la présente invention, on préférera les méthodes de chimie douce. Parmi elles, sont choisies les méthodes de co-précipitation, ou les méthodes de synthèse hydrothermales. Les méthodes de co-précipitation reposent sur une réaction de double décomposition entre un sel métallique et un oxalate alcalin, ou entre un sel métallique et l'acide oxalique. La synthèse hydrothermale permet d'obtenir directement les poudres d'oxydes cristallisés à l'issu d'un traitement sous pression autogène. Le titanate de baryum peut être synthétisé à partir d'une solution basique de trichlorure de titane, de chlorure de baryum et de chlorure de lanthane. Dans certains cas, la présence d'un agent complexant est indispensable pour pouvoir dissoudre les deux oxydes simples sur un même domaine de pH et assurer la précipitation de l'oxyde mixte final. Les poudres d'oxalates ainsi obtenues sont ensuite calcinées pour conduire aux oxydes correspondants.

Dans un aspect avantageux de l'invention, on choisira la méthode de co-précipitation de sels métalliques et de l'acide oxalique dans un solvant organique. Plus spécifiquement, les sels précurseurs sont les sels de dichlorure de baryum (BaCl$_2$,2H$_2$O) et de trichlorure de titane (TiCl$_3$). Le précurseur de lanthane est le trichlorure de lanthane (LaCl$_3$, 7H$_2$O). Il est ajouté à la solution de chlorures métalliques. Les poudres d'oxalates sont préparées par coprécipitation de la solution aqueuse de chlorures métalliques par une solution éthanoïque d'acide oxalique. Le temps de mûrissement peut être avantageusement de 5 heures 30 minutes. Une étape ultérieure de calcination conduit aux poudres de titanate de baryum utilisées comme matériau pour la mise en oeuvre du procédé selon l'invention. Cette étape est réalisée par exemple à une température de 850°C. De façon avantageuse, le diamètre des poudres de titanate de baryum utilisées est compris entre 10 nm et 500 nm.

La présente invention concerne également les céramiques susceptibles d'être obtenues selon le procédé mentionné ci-dessus. Comme indiqué plus haut, les propriétés diélectriques de ces matériaux s'en trouvent améliorées. C'est le cas notamment de la partie réelle de la permittivité diélectrique relative qui atteint des valeurs encore jamais observées.

L'invention concerne donc des céramiques à base de titanate de baryum dopé au lanthane qui présentent une partie réelle de la permittivité diélectrique relative supérieure à 100 000 mesurée à 1 kHz. Dans un aspect préféré cette valeur mesurée à 1 kHz est de 270 000.

De plus, les facteurs de pertes mesurés, qui caractérisent la dissipation totale d'énergie, sont relativement faibles, ce qui présente un avantage supplémentaire. Ils sont notamment compris entre 0,1 et 0,2 à une température variant de -100°C à + 150°C pour une fréquence de 1 kHz.

La mise en oeuvre du procédé selon l'invention permet de contrôler la croissance de la taille des grains de la céramique. L'invention concerne donc aussi des céramiques à base de titanate de baryum dont la taille de grains est inférieure à 100 nm, et préférentiellement inférieure à 150 nm.

L'invention concerne également des céramiques à base de titanate de baryum dopé au lanthane caractérisées par l'absence de comportement ferroélectrique dans la gamme de températures entre -100°C et +200°C.

Comme mentionné en introduction, les céramiques à base de titanate de baryum sont largement utilisées pour la fabrication de divers composants passifs qu'ils soient électrostatiques ou électro-optiques. En particulier, concernant les composants passifs, elles peuvent servir à l'obtention de condensateurs monocouches ou multicouches. L'utilisation des céramiques selon la présente invention permet d'atteindre en une seule étape des valeurs de capacités volumiques au moins identiques, voire supérieures, à celles de condensateurs multicouches qui nécessitent un grand nombre d'étapes technologiques, notamment le coulage en bande ou les métallisations internes.

L'invention concerne donc également des condensateurs caractérisés en ce qu'ils contiennent les céramiques à base de titanate de baryum dopé au lanthane selon l'invention. Dans un premier temps des condensateurs monocouches ont été obtenus notamment par métallisation des céramiques ainsi obtenues que ce soit par sérigraphie d'électrodes d'argent, par pulvérisation cathodique d'un métal, ou par toute autre méthode permettant la réalisation de contacts électriques. Ils présentent de fortes capacités volumiques, égales voire supérieures à celles mesurées dans le cas de condensateurs commerciaux. En particulier la valeur de la capacité des condensateurs selon l'invention est d'au moins 40 nF à 1 kHz et à la température ambiante, c'est-à-dire de 25°C pour une épaisseur de 1,5 mm et une surface de 0,2 $cm^2$. Plus particulièrement, une capacité volumique de 300 $nF/cm^3$ est obtenue pour une épaisseur de 1,5 mm et présente une tenue en tension au moins de l'ordre de 1 kV voire supérieure.

L'invention concerne aussi l'utilisation des céramiques telles que décrites précédemment pour la fabrication de composants passifs intégrés, notamment des condensateurs monocouches ou multicouches.

**Description des figures :**

Figure 1A : Micrographie MEB-FEG d'une poudre de composition $Ba_{0.952}La_{0.048}Ti_{0.988}O_3$ selon l'invention.

Figure 1B : Micrographies MEB-FEG de la surface de céramiques obtenues selon l'invention.

Figure 2A : Mesure de la partie réelle de la permittivité diélectrique relative sur une plage de températures comprises entre -100°C et 150°C pour différentes fréquences.

Figure 2B : Mesure de facteurs de pertes en fonction de la température pour différentes fréquences.

Figure 3 : Illustration de la reproductibilité de la méthode selon l'invention par la mesure de la partie réelle de la permittivité diélectrique relative pour deux échantillons A et B réalisés dans les mêmes conditions.

Les exemples qui suivent servent à illustrer l'invention, mais ne la limitent en aucune façon.

**Exemple 1 :** Préparation de poudres de titanate de baryum dopé au lanthane.

Les sels métalliques précurseurs de métaux utilisés sont :

■ Chlorure de baryum à 2 molécules d'eau ($BaCl_2, 2H_2O$) RP NORMAPUR® pour analyse (PROLABO) : M=248,28 g/mol, pureté 99,0 %.
■ Chlorure de titane (III) à 15 % en solution aqueuse RP NORMAPUR® pour analyse (PROLABO) : M=154,26 g/mol, d=1,2.
■ Chlorure de lanthane à 7 molécules d'eau RP NORMAPUR® pour analyse (PROLABO) : M= 371,37g/mol.

Le chlorure de lanthane (en proportion souhaitée) est ajouté à une solution de chlorure de baryum (0,125 mol) et de chlorure de titane (0,125 mol). Le mélange est dilué à l'eau distillée jusqu'à 800 ml pour constituer la solution 1.

L'acide oxalique (47,53 g) est dissous dans 5 l d'éthanol pour constituer la solution 2.

Les deux solutions sont mélangées sous un flux d'air pendant 5 heures 30 minutes pour conduire à la coprécipitation des oxalates mixtes. Après centrifugation, filtration, lavage à l'éthanol, et séchage à 100 °C durant une nuit, les poudres ainsi obtenues sont broyées et calcinées à une température de 850 °C pour conduire au titanate de baryum dopé au lanthane de formule : $Ba_{0.952}La_{0.048}Ti_{0.988}O_3$.

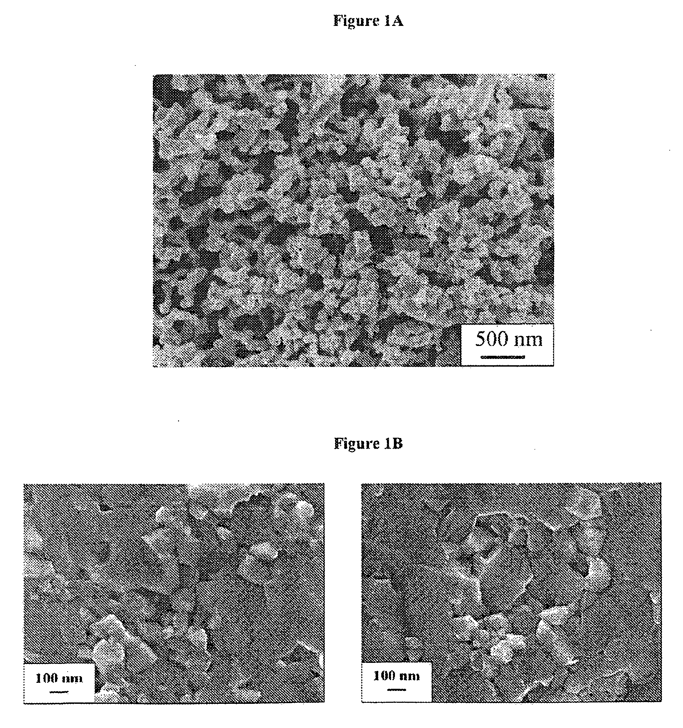

Les échantillons obtenus sont observés à l'aide d'un microscope électronique à balayage à effet de champ (JEOL 6700 F). La morphologie des poudres est visible sur la figure 1 A.

**Exemple 2 :** Préparation de céramiques

L'étape de frittage flash est réalisée à l'aide d'un appareil SPS (Spark Plasma Sintering) modèle SPS2080 de la société SUMBVIOTO (Japon).

La poudre de titanate de baryum dopé au lanthane selon l'exemple 1 (0,9 g) est placée dans une matrice en graphite de diamètre égal à 8 mm et un courant électrique de 370 A est appliqué sous une pression de 50 MPa. L'échantillon est ainsi chauffé jusqu'à 1050 °C avec une vitesse de chauffage de 50 °C/min. Après 3 minutes de palier à cette température, le courant électrique est coupé, ainsi que la pression sur l'échantillon. Au bout d'une minute supplémentaire, la température est revenue à 600°C.

Les céramiques ainsi obtenues sont ensuite soumises à un traitement thermique à 850°C pendant 2 heures sous atmosphère d'air.

La reproductibilité du procédé de l'invention a été vérifiée par la réalisation de deux échantillons à partir de la même poudre, et suivant des conditions opératoires identiques.

■ *Mesure de la densité apparente des céramiques*

La pesée hydrostatique dans l'eau est utilisée pour déterminer la densité apparente des céramiques. La balance électronique utilisée est de marque Kern ARJ220-4 M. Elle permet la mesure de masse comprise entre 0 et 220 g (précision de $10^4$ g). Les densités sont données par la formule :

$d = m_{air}/(m_{air} - m_{eau})$, dans laquelle $m_{air}$ est la masse dans l'air et $m_{eau}$ est la masse dans l'eau.

Les densifications sont exprimées en % de la densité théorique.

■ *Résultats :*

La densification des deux céramiques obtenues est de :

    Echantillon 1 : 96,1 %
    Echantillon 2 : 97,2 %

La morphologie des échantillons est observée à l'aide d'un microscope électronique à balayage à effet de champ (JEOL 6700 F) La surface de chaque échantillon est représentée sur la figure 1B.

Dans chaque cas la taille des particules est inférieure à 150 nm.

■ *Détermination de la partie réelle de la permittivité diélectrique relative* $\varepsilon'_r$

Pour déterminer la partie réelle de la permittivité diélectrique relative et le facteur de pertes, on utilise généralement un modèle simple dans lequel le diélectrique est assimilé à un condensateur imparfait représenté par une capacité parfaite de dimension finie, de surface S et d'épaisseur e et par une résistance. Ceci conduit à :

$$\varepsilon'_r = \frac{C.e}{\varepsilon_0.S}$$

et à

$$tg\delta = \frac{1}{R.C\omega} = \frac{\varepsilon''_r}{\varepsilon'_r}$$

où $\varepsilon_0$ est la permittivité du vide,

$\varepsilon'_r$ la partie réelle de la permittivité diélectrique relative,

$\varepsilon''_r$ la partie imaginaire de la permittivité diélectrique relative,

R est la valeur de la résistance,

C la valeur de la capacité, et

$\omega$ est la pulsation déterminée suivant la formule $\omega = 2\pi f$ où f est la fréquence du signal utilisé.

La permittivité complexe relative $\varepsilon^*_r$ est donnée par la formule $\varepsilon^*_r = \varepsilon'_r - j \, \varepsilon''_r$

La grandeur $tg\delta$ correspond aux pertes diélectriques (cette grandeur est encore appelée « facteur de pertes »). Elle caractérise la dissipation totale d'énergie du diélectrique quand un champ électrique lui est appliqué. D'un point de vue expérimental, ces grandeurs sont déterminées par la mesure de la capacité C et la résistance R. La possibilité d'effectuer cette mesure à des fréquences et des températures variables permet d'étendre l'analyse et de mieux comprendre les relations propriétés électriques/structures.

Les mesures sont réalisées à l'aide des appareils suivants :

*1. Système I :*

Un pont de mesure d'impédance de type HP 4284A dont la gamme de fréquence s'étend de 20Hz à 1MHz,
Un analyseur de gain et de phase HP 4194A dont la gamme de fréquence s'étend de 40 Hz à 110 MHz,
Une enceinte régulée en température dans la gamme de -75°C à 160°C,
Un ordinateur PC pour automatiser le processus de mesure.

*2. Système II :*

Un T. A. INSTRUMENT DEA 2970 dans la gamme de fréquences de 0,1 Hz à 100 kHz,
Une enceinte thermostatée qui peut régler la température de -200°C à 160°C,
Un ordinateur PC pour automatiser le processus de mesure.

*Résultats :*

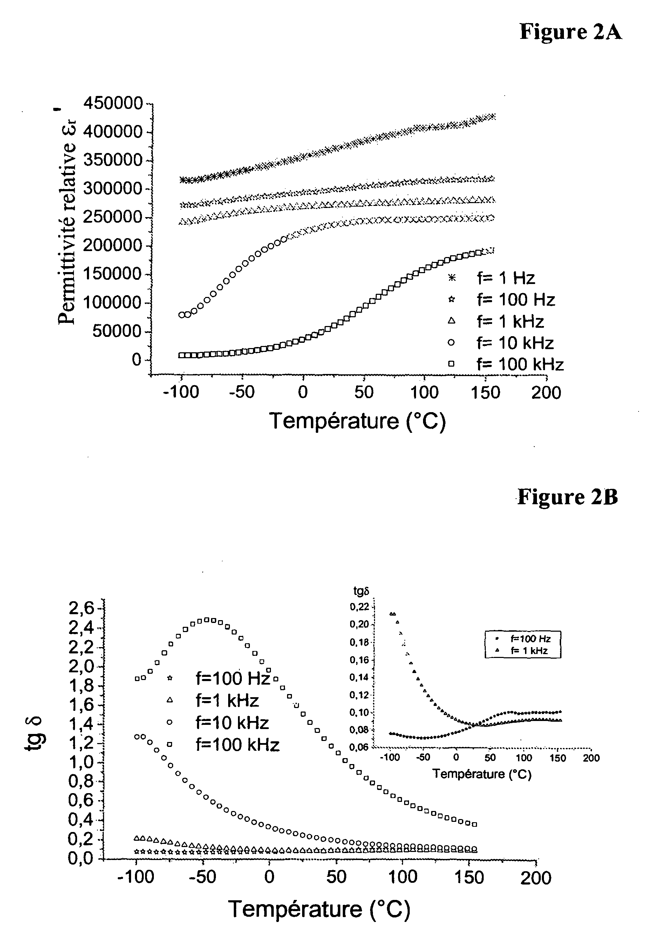

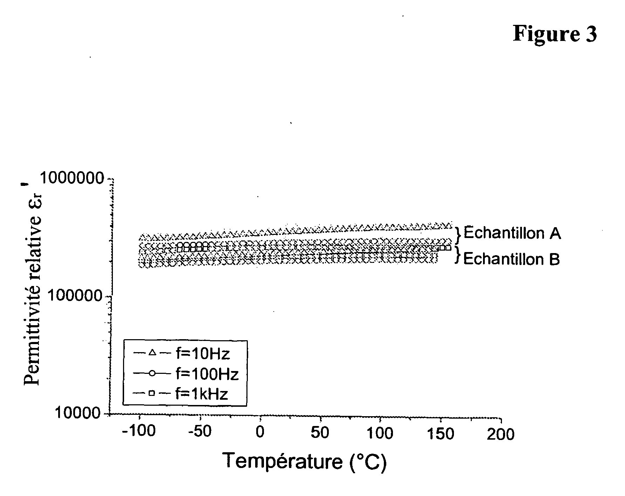

Les résultats sont regroupés sur la figure 2A pour les mesures de la partie réelle de la permittivité diélectrique relative et sur la figure 2B pour les mesures de du facteur de pertes. La reproductivité du procédé de fabrication des céramiques selon l'invention est illustrée sur la figure 3.
Les valeurs de la partie réelle de la permittivité diélectrique relative mesurées sont très élevées pour des fréquences comprises entre 1 Hz et 10 kHz, et sur toute la plage de température. De plus, ces valeurs sont quasiment constantes pour les trois premières fréquences étudiées.
La variation des pertes observées *(tg δ)* traduit un minimum de perte d'énergie sur la plage de température et aux fréquences étudiées.

## Revendications

1.   Procédé de préparation de céramiques à base de titanate de baryum dopé au lanthane comprenant les étapes de :

    (a) frittage flash de poudres de titanate de baryum dopé au lanthane. à une température comprise entre 950°C et 1050°C, pendant une durée comprise entre 1 et 10 min, sous une pression d'au moins 50 MPa,
    (b) traitement thermique du matériau ainsi obtenu à une température comprise entre 800°C et 900°C pendant une durée comprise entre 2 et 24 heures, sous atmosphère d'air, ou sous atmosphère oxydante.

2.   Procédé de préparation selon la revendication 1, **caractérisé en ce que** l'étape (a) s'effectue à une température de 1050°C pendant 3 min, et sous un courant de 370 A.

3.   Procédé de préparation selon l'une des revendications 1 ou 2, **caractérisé en ce que** la température de frittage de l'étape (a) est obtenue à l'aide d'une rampe de température de 50°C par minute, à partir de la température ambiante.

4.   Procédé de préparation selon l'une des revendications 1 à 3, **caractérisé en ce que** l'étape (b) s'effectue à une température de 850°C pendant 2 heures sous atmosphère d'air.

5.   Procédé de préparation selon l'une des revendications 1 à 4, **caractérisé en ce que** les poudres de titanate de baryum dopé au lanthane répondent à la formule $La_xBa_{(1-a)}Ti_{(1-x/4)}O_3$, dans laquelle x vaut 0,048.

6.   Procédé de préparation selon l'une des revendications 1 à 5, **caractérisé en ce que** les poudres de titanate de baryum dopé au lanthane sont synthétisées par chimie douce.

7.   Procédé de préparation selon la revendication 6, **caractérisé en ce que** les poudres de titanate de baryum dopé au lanthane sont obtenues par ;

    - coprécipitation de $TiCl_3$ et $BaCl_2,2H_2O$ avec $LaCl_3,7H_2O$ en présence d'une solution éthanoïque d'acide oxalique pendant 5 heures 30 minutes, puis
    - calcination à 850°C.

8.   Céramiques à base de titanate de baryum dopé au lanthane susceptibles d'être obtenues selon le procédé de l'une des revendications 1 à 7 et présentant une partie réelle de la permittivité diélectrique relative supérieure à 100 000 à 1 kHz.

9.  Céramiques à base de titanate de baryum dopé au lanthane selon la revendication 8, **caractérisées en ce qu'**elles présentent une taille de grains inférieure à 100 nm, et préférentiellement inférieure à 150 nm.

10. Céramiques à base de titanate de baryum dopé au lanthane selon l'une des revendications 8 ou 9, **caractérisées par** l'absence de comportement ferroélectrique dans une gamme de températures comprises entre -100°C et 200°C.

11. Condensateurs à capacité volumique élevée **caractérisés en ce qu'**ils contiennent les céramiques telles que définies dans l'une des revendications 8 à 10.

12. Condensateurs monocouches selon la revendication 11, **caractérisés en ce que** leur capacité est d'au moins 40 nF à 1 kHz à température ambiante, pour une épaisseur de 1,5 mm et une surface de 0,2 cm$^2$.

13. Condensateurs monocouches selon la revendication 11, **caractérisés en ce que** leur capacité volumique est de 300 nF/cm$^3$ pour une épaisseur de 1,5 mm et une tenue en tension égale ou supérieure à 1 kV.

14. Utilisation des céramiques selon l'une des revendications 8 à 10 pour la fabrication de composants passifs intégrés, en particulier des condensateurs.

**Patentansprüche**

1.  Verfahren zum Herstellen von Keramiken auf Basis von Lanthan-dotiertem Bariumtitanat, umfassend die nachfolgenden Schritte:

    (a) Spark-Plasma-Sintern von Pulvern aus Lanthan-dotiertem Bariumtitanat bei einer Temperatur von zwischen 950 °C und 1050 °C für eine Dauer von zwischen 1 und 10 min. unter einem Druck von mindestens 50 MPa,
    (b) Wärmebehandlung des so erhaltenen Materials bei einer Temperatur von zwischen 800 °C und 900 °C für eine Dauer von zwischen 2 und 24 Stunden unter Luftatmosphäre oder unter oxidierender Atmosphäre.

2.  Herstellungsverfahren nach Anspruch 1, **dadurch gekennzeichnet, dass** der Schritt (a) bei einer Temperatur von 1050 °C für 3 min. und unter Strom mit 370 A erfolgt.

3.  Herstellungsverfahren nach einem der Ansprüche 1 oder 2, **dadurch gekennzeichnet, dass** die Sinter-Temperatur bei Schritt (a) mit Hilfe einer Temperaturrampe von 50 °C pro Minute ausgehend von der Umgebungstemperatur erreicht wird.

4.  Herstellungsverfahren nach einem der Ansprüche 1 bis 3, **dadurch gekennzeichnet, dass** der Schritt (b) bei einer Temperatur von 850 °C für 2 Stunden unter Luftatmosphäre erfolgt.

5.  Herstellungsverfahren nach einem der Ansprüche 1 bis 4, **dadurch gekennzeichnet, dass** die Pulver aus Lanthan-dotiertem Bariumtitanat der nachfolgenden Formel entsprechen:
    $La_xBa(1-_x)Ti(1-_{x/4})O_3$, worin x 0,048 beträgt.

6.  Herstellungsverfahren nach einem der Ansprüche 1 bis 5, **dadurch gekennzeichnet, dass** die Pulver aus Lanthan-dotiertem Bariumtitanat durch sanfte Chemie synthetisiert werden.

7.  Herstellungsverfahren nach Anspruch 6, **dadurch gekennzeichnet, dass** die Pulver aus Lanthan-dotiertem Bariumtitanat gewonnen werden durch:

    - Kopräzipitation von $TiCl_3$ und $BaCl_2,2H_2O$ mit $LaCl_3,7H_2O$ bei einer vorhandenen Oxalsäure-Ethan-Lösung für 5 Stunden und 30 Minuten, gefolgt von einer
    - Kalzinierung bei 850 °C.

8.  Keramiken auf Basis von Lanthan-dotiertem Bariumtitanat, die mit dem Verfahren nach einem der Ansprüche 1 bis 7 erhalten werden können und einen Realteil der relativen Dielektrizitätskonstante von über 100 000 bei 1 kHz aufweisen.

**9.** Keramiken auf Basis von Lanthan-dotiertem Bariumtitanat nach Anspruch 8, **dadurch gekennzeichnet, dass** sie eine Korngröße von unter 100 nm, vorzugsweise unter 150 nm aufweisen.

**10.** Keramiken auf Basis von Lanthan-dotiertem Bariumtitanat nach einem der Ansprüche 8 oder 9, **gekennzeichnet durch** ein ausbleibendes ferroelektrisches Verhalten in einem Temperaturbereich von zwischen -100 °C und 200 °C.

**11.** Kondensatoren mit hoher Volumenkapazität, **dadurch gekennzeichnet, dass** sie Keramiken enthalten, wie sie in einem der Ansprüche 8 bis 10 definiert sind.

**12.** Einschichtkondensatoren nach Anspruch 11, **dadurch gekennzeichnet, dass** deren Kapazität mindestens 40 nF bei 1 kHz bei Umgebungstemperatur bei einer Dicke von 1,5 mm und einer Fläche von 0,2 cm$^2$ beträgt.

**13.** Einschichtkondensatoren nach Anspruch 11, **dadurch gekennzeichnet, dass** deren Volumenkapazität 300 nF/cm$^3$ bei einer Dicke von 1,5 mm und einer Spannungsfestigkeit gleich oder größer 1 kV beträgt.

**14.** Verwendung von Keramiken nach einem der Ansprüche 8 bis 10 bei der Herstellung von integrierten passiven Bauelementen, insbesondere von Kondensatoren.

**Claims**

**1.** A method of preparation of ceramics based on lanthanum-doped barium titanate comprising the following steps:

(a) flash sintering of lanthanum-doped barium titanate powder, at a temperature between 950°C and 1050°C, for a period of time between 1 min and 10 min, at a pressure of at least 50 MPa,
(b) heat treatment of the material thus obtained, at a temperature between 800°C and 900°C, for a period of time between 2 h and 24 h, in an atmosphere of air or in an oxidizing atmosphere.

**2.** The method of preparation according to claim 1, **characterized in that** the step (a) is carried out at a temperature of 1050°C for 3 minutes with a current of 370 A.

**3.** The method of preparation according to one of claims 1 or 2, **characterized in that** the sintering temperature in step (a) is reached using a temperature ramp of 50°C per minute, starting at room temperature.

**4.** The method of preparation according to one of claims 1 to 3, **characterized in that** the step (b) is carried out at a temperature of 850°C, for 2 hours, in an atmosphere of air.

**5.** The method of preparation according to one of claims 1 to 4, **characterized in that** the lanthanum-doped barium titanate powders answer the formula $La_xBa_{(1-x)}Ti_{(1-x/4)}O_3$, wherein x=0.048.

**6.** The method of preparation according to one of claims 1 to 5, **characterized in that** the lanthanum-doped barium titanate powders are synthesized by soft chemistry.

**7.** The method of preparation according to claim 6, **characterized in that** the lanthanum-doped barium titanate powders are obtained by:

- coprecipitating $TiCl_3$ and $BaCl_2, 2H_2O$ with $LaCl_3, 7H_2O$ in the presence of an ethanolic solution of oxalic acid for 5.5 hours, then
- calcining at 850°C.

**8.** Ceramics based on lanthanum-doped barium titanate obtainable according to the method of one of claims 1 to 7 and possessing a real part of the relative dielectric permittivity higher than 100,000 to 1 kHz.

**9.** Ceramics based on lanthanum-doped barium titanate according to claim 8, **characterized in that** said ceramics have a grain size smaller than 100 nm, preferentially smaller than 150 nm.

**10.** Ceramics based on lanthanum-doped barium titanate according to one of claims 8 or 9, **characterized by** the absence of ferroelectric behavior in the range of temperatures between -100°C and +200°C.

**11.** Capacitors with high capacitance per unit volume that contain the ceramics as defined in one of claims 8 to 10.

**12.** Monolayer capacitors according to claim 11, **characterized in that** their capacitance is at least 40 nF, at 1 kHz, at room temperature, for a thickness of 1.5 mm and a surface area of 0.2 cm$^2$.

**13.** Monolayer capacitors according to claim 11, **characterized in that** their capacitance per unit volume is 300 nF/cm$^3$ for a thickness of 1.5 mm and a withstand capacity equal to or greater than 1 kV.

**14.** The use of the ceramics according to one of claims 8 to 10 for manufacturing integrated passive components, in particular capacitors.

Figure 1A

500 nm

Figure 1B

100 nm

100 nm

**Figure 2A**

**Figure 2B**

**Figure 3**

## RÉFÉRENCES CITÉES DANS LA DESCRIPTION

**Documents brevets cités dans la description**

• US 6905649 B

**Littérature non-brevet citée dans la description**

• *J. Mat. Sri.,* 2001, vol. 36, 2329-2334
• **TAKENCHI et al.** *J. Am. Ceram. Soc.,* 1999, vol. 82 (4), 939-43
• *J. Am. Ceram. Soc,* 2001, vol. 84 (3), 531-538
• **MORRISON et al.** *J.Am.Ceram.Soc.,* 1998, vol. 81 (7), 1957-60